# DEMANDE DE BREVET EUROPEEN

(11) **EP 0 999 181 A1**
(43) Date de publication de la demande: **10.05.2000**
(21) Numéro de dépôt: 99203732.5
(22) Date de dépôt: 03.11.1999
(51) Int. Cl.: C01B 15/023

(54) **Procédé de fabrication de peroxyde d'hydrogène**

(30) Priorité: 05.11.1998 BE 9800806
(71) Demandeur: SOLVAY (Société Anonyme), 1050 Bruxelles (BE)
(72) Inventeur: Vandenberg, Dominique, 1332 Rixensart (BE); Ganhy, Jean-Pierre, 1170 Bruxelles (BE); Vanlautem, Noel, 1300 Wavre (BE)
(74) Mandataire: Vande Gucht, Anne

(57) **Abrégé**

Procédé de fabrication de peroxyde d'hydrogène comprenant les étapes alternées d'hydrogénation et d'oxydation d'une solution de travail contenant une anthraquinone dissoute dans au moins un solvant organique et l'extraction du peroxyde d'hydrogène formé dans l'étape d'oxydation, l'étape d'hydrogénation étant réalisée dans un réacteur d'hydrogénation contenant un lit fixe de catalyseur d'hydrogénation en introduisant un écoulement concourant de la solution de travail et d'un gaz hydrogénant dans le bas du réacteur d'hydrogénation et ensuite en le faisant monter dans ledit réacteur pour qu'il traverse le lit fixe de catalyseur.

## Description

La présente invention est relative à un procédé de fabrication de peroxyde d'hydrogène comprenant les étapes alternées d'hydrogénation et d'oxydation d'une solution de travail contenant une anthraquinone dissoute dans un ou plusieurs solvants organiques et l'extraction du peroxyde d'hydrogène formé dans l'étape d'oxydation, l'étape d'hydrogénation étant réalisée dans un réacteur d'hydrogénation contenant un lit fixe de catalyseur d'hydrogénation.

Des procédés de fabrication de peroxyde d'hydrogène dans lesquels l'étape d'hydrogénation est effectuée dans un réacteur à lit fluide, sont connus. Dans un réacteur à lit fluide, un très bon contact peut être obtenu entre les trois phases réactionnelles (le milieu liquide contenant l'anthraquinone, le catalyseur solide, et l'hydrogène gazeux) et de ce fait, la productivité de ce type de réacteur est généralement élevée.

Comparativement aux réacteurs d'hydrogénation à lit fluide, les réacteurs d'hydrogénation à lit fixe présentent l'avantage de ne pas nécessiter de secteur de filtration complexe et offrent généralement une sélectivité élevée vis-à-vis des réactions de surhydrogénation. C'est ainsi qu'un grand nombre de publications ont trait à l'utilisation de réacteurs à lit fixe pour l'étape d'hydrogénation et, d'une manière générale, elles se différencient par la description de structures catalytiques particulières et/ou par les débits de la phase liquide au travers du lit catalytique. Sur la base des débits indiqués, on peut estimer le régime de fonctionnement des divers réacteurs décrits dans ces publications et on en conclut que la plupart d'entre eux fonctionnent en lit noyé descendant. Parmi les réacteurs fonctionnant en lit noyé descendant décrits, on notera plus particulièrement le brevet des Etats-Unis d'Amérique n° 4.428.922 qui mentionne clairement l'utilisation de réacteurs fonctionnant en régime dit "à bulles dispersées", l'écoulement des phases gazeuses et liquide se faisant suivant un écoulement concourant descendant. Ce brevet revendique également l'utilisation d'un prémélangeur des phases liquide et gazeuse avant tout contact avec le catalyseur. Le principal inconvénient de ces réacteurs utilisés en courant descendant est que l'obtention du régime noyé demande d'opérer à des débits de la phase gazeuse relativement faibles mais à des débits élevés de la phase liquide, ce qui implique généralement la recirculation de la phase liquide avec, comme conséquences principales, un équipement sophistiqué et des coûts supplémentaires de fonctionnement et d'appareillage.

L'objectif de la présente invention consiste à fournir un procédé de fabrication de peroxyde d'hydrogène, utilisant pour l'étape d'hydrogénation de la solution de travail un type de réacteur, de conception très simple et peu coûteux, qui permet de résoudre aisément les problèmes de distribution des phases et de mouillage du catalyseur, rencontrés dans les réacteurs à écoulement descendant.

A cet effet l'invention concerne un procédé de fabrication de peroxyde d'hydrogène comprenant les étapes alternées d'hydrogénation et d'oxydation d'une solution de travail contenant une anthraquinone dissoute dans au moins un solvant organique et l'extraction du peroxyde d'hydrogène formé dans l'étape d'oxydation, l'étape d'hydrogénation étant réalisée dans un réacteur d'hydrogénation contenant un lit fixe de catalyseur d'hydrogénation; l'hydrogénation est effectuée en introduisant concouramment la solution de travail et un gaz hydrogénant dans le bas du réacteur d'hydrogénation et ensuite en les faisant monter dans ledit réacteur pour qu'ils traversent le lit fixe de catalyseur.

Le réacteur d'hydrogénation utilisé dans le procédé selon l'invention contenant le lit fixe de catalyseur peut être tout réacteur de type conventionnel. Ce réacteur peut avoir toutes formes et dimensions couramment rencontrées dans les procédés d'hydrogénation de ce type. Le réacteur d'hydrogénation est de préférence un réacteur tubulaire, plus particulièrement une colonne.

Suivant une forme de réalisation avantageuse de l'invention, la solution de travail et le gaz hydrogénant sont introduits dans le bas de réacteur au travers d'une plaque de matière frittée ou de tout système permettant une bonne dispersion de la phase gazeuse dans la phase liquide.

En général, l'hydrogénation est réalisée sans recyclage ou recirculation de la solution de travail. En particulier, l'hydrogénation est réalisée sans recyclage ou recirculation de la solution de travail du haut du réacteur d'hydrogénation vers le bas du réacteur d'hydrogénation.

Dans le procédé selon l'invention une solution de travail contenant une anthraquinone est dissoute dans un solvant organique adéquat. On peut utiliser à titre d'anthraquinones celles qui sont utilisées conventionnellement dans les procédés de fabrication de peroxyde d'hydrogène par le procédé appelé AO (auto-oxydation). Il peut en particulier s'agir d'alkylanthraquinones ou de mélanges de celles-ci. Des alkylanthraquinones qui conviennent bien sont par exemple les 2-alkylanthraquinones telles que 2-éthylanthraquinone, 2-isopropylanthraquinone, 2-n-butylanthraquinone, 2-sec-butylanthraquinone, 2-tert-butylanthraquinone, 2-amylanthraquinone, 2-sec-amylanthraquinone, 2-tert-amylanthraquinone ou des mélanges de celles-ci. Il peut également s'agir de 2-alkyl-5,6,7,8-tetrahydroanthraquinones et leurs mélanges avec les 2-alkylanthraquinones correspondantes. Des solutions de travail particulièrement avantageuses sont celles contenant de l'amylanthraquinone, de l'amyltétrahydroanthraquinone ou un mélange de celles-ci.

Les solvants organiques utilisés dans le procédé selon l'invention peuvent être choisis parmi ceux couramment utilisés dans les procédés de fabrication de peroxyde d'hydrogène. En particulier, des mélanges de deux ou plusieurs solvants peuvent être utilisés. On utilise avantageusement un mélange d'un solvant non-polaire aromatique (qui permet de solubiliser les anthraquinones) avec un solvant polaire (qui permet de solubiliser les hydroanthraquinones). Des exemples de solvants non-polaires aromatiques sont des composés aromatiques substitués par au moins un groupement alkyle, en particulier les alkylbenzènes contenant de 8 à 12 atomes de carbone ou leurs mélanges. Des exemples de solvants polaires sont les alcools (par exemple le diisobutylcarbinol ou le 2-octanol), l'urée substituée par des groupements alkyle ou aryle, des esters d'acide phosphorique (par exemple le trioctyl phosphate), le 2-pyrrolidone et l'acétate de 2-methylcyclohexyle. Des exemples de mélanges de solvants qui conviennent bien sont les mélanges d'un composé alkylaromatique contenant 10 atomes de carbone avec le dilsobutylcarbinol ou avec l'acétate de 2-méthylcyclohexyle. La solution de travail contient généralement de 2 à 40 % en poids de dérivés anthraquinoniques (anthraquinones et tetrahydroanthraquinones).

Dans le procédé selon l'invention, l'étape d'hydrogénation est réalisée, comme on l'a vu, dans un réacteur d'hydrogénation contenant un lit fixe de catalyseur d'hydrogénation. Le lit fixe de catalyseur consiste généralement en un empilement immobile de grains de catalyseur ou toutes autres structures catalytiques.

Le catalyseur d'hydrogénation utilisable dans le procédé selon l'invention contient généralement un élément actif métallique ou un mélange d'éléments actifs métalliques déposé(s) ou adsorbé(s) sur un support inerte. L'élément actif métallique peut habituellement être choisi parmi le rhodium, le palladium, le platine ou le rhenium. Le palladium est préféré. La teneur en élément(s) actif(s) métallique(s) dans le catalyseur ne dépasse pas en général 10 % en poids. Le support peut être choisi parmi l'oxyde d'aluminium, de titane, de zirconium, les gels de silice, du charbon actif ou des polymères organiques ou leurs mélanges. Les supports en silice en combinaison ou non avec les oxydes d'aluminium, de titane ou de zirconium sont souvent utilisés. Les catalyseurs contenant du palladium à titre d'élément actif déposé sur un support en silice conviennent particulièrement bien. Les grains de catalyseur peuvent être de formes diverses. Le catalyseur se présente plus particulièrement sous la forme de granules sphériques ou de concassés, par exemple d'un diamètre moyen de l'ordre de 0,1 à 10 mm, préférentiellement de 0,6 à 2 mm.

Dans le procédé selon l'invention, le catalyseur se présente avantageusement sous une forme non monolithe. En particulier, le catalyseur se présente sous forme de granules.

Suivant l'invention, l'hydrogénation est généralement réalisée à une température comprise entre 20 °C et 100 °C, avantageusement entre 45 °C et 75 °C, par exemple à 55 °C environ.

Le gaz hydrogénant utilisable dans le procédé selon l'invention est de l'hydrogène (dihydrogène), éventuellement dilué dans un gaz inerte. Par gaz inerte on entend désigner un gaz qui ne réagit pas avec les solvants de la solution de travail, ni avec le catalyseur d'hydrogénation, les anthraquinones ou hydroanthraquinones. Des exemples de gaz inertes sont l'azote (diazote), les gaz fluorés (appelés HFC - 〈〈 HydroFluoroCarbons 〉〉) et les gaz rares. L'azote donne de bons résultats. Des résultats performants peuvent être obtenus lorsqu'un mélange d'hydrogène et un gaz inerte tel que l'azote est utilisé. Le rapport en volume de gaz inerte sur l'hydrogène peut être de 0,5/10 à 8/10 et est de préférence de 4/10 à 1/10. La présence d'un gaz inerte présente l'avantage surprenant de conduire à une stabilité améliorée de l'activité catalytique. La présence d'un gaz inerte présente également comme avantage de permettre le recyclage (ou la recirculation) d'une partie du gaz. Ceci peut être avantageux pour assurer un fonctionnement plus économique des systèmes de pompage qui alimentent le réacteur d'hydrogénation en gaz hydrogénant.

Dans le procédé selon l'invention, la solution de travail et le gaz hydrogénant peuvent être amenés directement dans le bas du réacteur d'hydrogénation au moyen d'un simple conduit d'entrée conventionnel et en ajustant la pression et le débit du gaz hydrogénant et de la solution de travail aux valeurs habituellement utilisées à cet effet. C'est ainsi que, par exemple, une pression de gaz hydrogénant dans le réacteur d'hydrogénation, de 1,2 à 15 bar, avantageusement de 1,8 à 5 bar, se révèle tout à fait satisfaisante. En général, la vitesse superficielle de la solution de travail dans le réacteur d'hydrogénation est de 0,02 à 0,20 cm/s. Le plus souvent, la vitesse superficielle du gaz hydrogénant dans le réacteur d'hydrogénation, est de 1,5 à 5,0 cm/s.

Comme on pourra le constater, la différence essentielle entre le type de réacteur utilisé dans le cadre de la présente invention et le type de réacteur connu est qu'il s'agit d'un réacteur à lit fixe noyé, fonctionnant à flux ascendant. Le réacteur d'hydrogénation peut fonctionner en régime appelé 〈〈 à brouillard 〉〉, 〈〈 à lit pulsé 〉〉, ou 〈〈 à bulles dispersées 〉〉. De préférence, on opère en régime dit à bulles dispersées. En fait, ce type de réacteur, de conception extrêmement simple, a peu été utilisé dans l'industrie chimique jusqu'à présent de par la difficulté de maintenir le lit catalytique parfaitement immobile lorsqu'il est parcouru par le débit de gaz et de liquide, pouvant ainsi entraîner une attrition non désirée du catalyseur. Toutefois, ce genre d'inconvénient avec les réacteurs de la dernière génération est parfaitement évitable et il présente le grand intérêt, comme l'a déjà noté, d'éviter les problèmes de distribution des phases et du mouillage du catalyseur, rencontrés dans les réacteurs similaires mais à écoulement descendant.

Les quelques exemples qui suivent permettent d'illustrer et de mieux comprendre l'invention, sans toutefois constituer une limitation à celle-ci.

### Exemples

On a effectué plusieurs essais de production de peroxyde d'hydrogène en utilisant des solutions de travail synthétiques contenant des 2-amylanthraquinones, un hydrocarbure aromatique et un alcool organique et des solutions de travail provenant d'installations industrielles. Ces solutions contenaient environ 200 g/kg de quinones essentiellement composées d'amyltétrahydroanthraquinone. Les essais ont été réalisés dans un réacteur tubulaire de 1,4 m de haut et de 18,0 mm de diamètre, le lit catalytique étant constitué de catalyseurs du type Pd/SiO₂ sous la forme de granules sphériques. La solution de travail et l'hydrogène sont introduits directement dans le bas de la colonne du réacteur à travers une plaque frittée, pour réaliser le régime à bulles dispersées, particulièrement favorable dans ce type d'opérations.

Le mélange moussant de la solution de travail et d'hydrogène est amené du bas du réacteur d'hydrogénation vers le haut à travers le catalyseur de Pd/SiO₂ à lit fixe jusqu'au sommet du réacteur d'hydrogénation, à une température de 55 °C. La solution de travail hydrogénée résultante est alors récupérée.

Celle-ci est ensuite pompée dans un réacteur d'oxydation où elle est oxydée par barbotage d'air (pression atmosphérique, température d'environ 45 °C) jusqu'à son oxydation complète. La solution de travail oxydée est transférée dans une cellule d'extraction où le peroxyde d'hydrogène formé est extrait de la solution de travail avec de l'eau. La phase organique obtenue après l'extraction et la séparation de la phase aqueuse est recyclée vers l'étape d'hydrogénation. La phase aqueuse contient la majeure partie du peroxyde d'hydrogène.

Le Tableau I ci-après illustre les conditions de travail et caractéristiques du traitement ainsi que la productivité du procédé d'hydrogénation. La productivité du procédé d'hydrogénation a été déterminée par la mesure du poids d'équivalents de peroxyde d'hydrogène produit par heure et par kilogramme de catalyseur (g de H₂O₂ / h * kg de catalyseur).

**Tableau I**

| Caractéristiques | Essai 1 | Essai 2 | Essai 3 |
|---|---|---|---|
| Solution de travail (*) | Synthétique | Industrielle | Industrielle (identique à essai 2) |
| Catalyseur | 0,5 % de Pd/SiO₂ Sphères : 2-3 mm | 0,5 % de Pd/SiO₂ Sphères : 2-3 mm | 0,2 % de Pd/SiO₂ Sphères : 0,4-0,6 mm |
| Poids de catalyseur (g) | 184 | 172 | 88 |
| Température (°C) | 55 | 55 | 55 |
| Pression entrée (bar absolu) | 2,0 | 2,0 | 2,0 |
| Flux massique superficiel (solution) (kg/s*m²) | 0,54 | 0,47 | 0,90 |
| Flux massique superficiel (gaz) (kg/s*m²) | 1,1*10³ | 1,1*10³ | 1,4*10³ |
| Pertes de charge (bar/m) | < 0,01 | < 0,01 | 0,2-0,4 |
| Productivité massique (g de H₂O₂/h *kg de cata) | 60 | 35 | 146 |
| Productivité massique (Pd) (g de H₂O₂/h *kg de Pd) | 12 | 7 | 73 |
| Formation de produit de surhydrogénation (g/kg de H₂O₂ produit) | --- | 10 | 9 |

| | | | |
|---|---|---|---|
| * Solution de travail synthétique: mélange d'amylanthraquinones dans un mélange de solvants organiques ne contenant pas de produits dégradés | | | |

Ces résultats montrent que le réacteur à lit noyé ascendant donne des résultats avantageux dans le cadre de la production de peroxyde d'hydrogène. Bien entendu, les performances de ce type de réacteur, tout comme pour les réacteurs classiques et les réacteurs du type à lit fixe descendant, dépendent des conditions de fonctionnement mais aussi de la nature du catalyseur et de la taille des grains du catalyseur. Une productivité de l'ordre de 150 g de H₂O₂/h* kg cata a pu être obtenue avec une navette industrielle. Sur base des résultats antérieurs, on peut estimer par conséquent que la productivité massique avec une navette synthétique pourrait être de l'ordre de 250 g/h*kg cata (comparaison des essais 1 et 2).

Par rapport aux réacteurs classiques, l'emploi du réacteur à lit fixe noyé ascendant permet de simplifier le secteur de filtration et les procédures de nettoyage. Par ailleurs, le fonctionnement du réacteur à lit noyé ascendant est remarquablement stable et présente des pertes de charge très faibles. Par rapport au fonctionnement en lit noyé descendant (grand débit de la phase liquide), il permet, comme on l'a déjà précisé, d'obtenir des productivités extrêmement intéressantes sans recirculation de la phase liquide sur le catalyseur. Cet aspect est à mettre en évidence car avec ce type de réacteur, un excès de phase liquide sur le catalyseur conduit généralement à une désactivation très rapide de celui-ci. De plus, le fonctionnement à débit de recirculation élevé est préjudiciable à la sélectivité de l'hydrogénation et induit une consommation énergétique importante. D'autre part, le débit relatif de gaz nécessaire pour le fonctionnement en lit noyé ascendant est très faible (à peine supérieur à la quantité stoechiométrique). L'emploi du réacteur à lit noyé ascendant permet donc d'éviter la consommation énergétique liée à la recirculation de la solution de travail et de limiter la consommation énergétique liée à la circulation de la phase gazeuse.

L'influence de la morphologie du catalyseur, comme la surface spécifique, la rugosité, la granulométrie, la forme sur les performances du réacteur étant par ailleurs déterminantes, elles laissent par conséquent la place à des améliorations ultérieures.

Il doit être entendu que la présente invention n'est en aucune façon limitée aux formes de réalisation ci-dessus et que bien des modifications peuvent y être apportées sans sortir du cadre du présent brevet.

## Revendications

1. Procédé de fabrication de peroxyde d'hydrogène comprenant les étapes alternées d'hydrogénation et d'oxydation d'une solution de travail contenant une anthraquinone dissoute dans au moins un solvant organique et l'extraction du peroxyde d'hydrogène formé dans l'étape d'oxydation, l'étape d'hydrogénation étant réalisée dans un réacteur d'hydrogénation contenant un lit fixe de catalyseur d'hydrogénation, caractérisé en ce que l'hydrogénation est effectuée en introduisant un écoulement concourant de la solution de travail et d'un gaz hydrogénant dans le bas du réacteur d'hydrogénation et ensuite en le faisant monter dans ledit réacteur pour qu'il traverse le lit fixe de catalyseur.

2. Procédé suivant la revendication 1, caractérisé en ce que l'écoulement de la solution de travail et de gaz hydrogénant est introduit dans le bas du réacteur au travers d'une plaque de matière frittée ou tout système permettant la dispersion du gaz dans la solution de travail.

3. Procédé suivant la revendication 1 ou 2, caractérisé en ce que l'hydrogénation est réalisée sans recirculation de la solution de travail.

4. Procédé suivant la revendication 3, caractérisé en ce que l'hydrogénation est réalisée sans recirculation de la solution de travail du haut du réacteur d'hydrogénation vers le bas du réacteur d'hydrogénation.

5. Procédé suivant l'une quelconque des revendications 1 à 4, caractérisé en ce que la solution de travail contient de l'amylanthraquinone, de l'amyltétrahydroanthraquinone ou un mélange de celles-ci.

6. Procédé suivant la revendication 5, caractérisé en ce que la solution de travail contient, comme anthraquinone, essentiellement de l'amyltétrahydroanthraquinone.

7. Procédé suivant l'une quelconque des revendications 1 à 6, caractérisé en ce que le catalyseur se présente sous une forme non monolithe.

8. Procédé suivant la revendication 7, caractérisé en ce que le catalyseur se présente sous forme de particules.

9. Procédé suivant la revendication 8, caractérisé en ce que le catalyseur contient du palladium déposé sur un support en silice, sous la forme de granules sphériques d'un diamètre moyen de 0,1 à 10 mm, avantageusement de 0,6 à 2 mm.

10. Procédé suivant l'une quelconque des revendications 1 à 9, caractérisé en ce que la pression du gaz hydrogénant dans le réacteur d'hydrogénation est de 1,2 à 15 bar (absolus), avantageusement de 1,8 à 5 bar.

11. Procédé suivant l'une quelconque des revendications 1 à 10, caractérisé en ce que la vitesse superficielle de la solution de travail, dans le réacteur d'hydrogénation, est de 0,02 à 0,20 cm/s.

12. Procédé suivant l'une quelconque des revendications 1 à 11, caractérisé en ce que la vitesse superficielle du gaz hydrogénant, dans le réacteur d'hydrogénation, est de 1,5 à 5,0 cm/s.

13. Procédé suivant l'une quelconque des revendications 1 à 12, caractérisé en ce que l'étape d'hydrogénation est réalisée à une température de 20 à 100 °C, avantageusement de 45 à 75 °C.

14. Procédé suivant l'une quelconque des revendications 1 à 13, caractérisé en ce que le réacteur d'hydrogénation fonctionne en régime dit 〈〈 à bulles dispersées 〉〉.

15. Procédé suivant l'une quelconque des revendications 1 à 14, caractérisé en ce que le gaz hydrogénant est dilué par un gaz inerte.
